# FASCICULE DE BREVET EUROPEEN

(11) **EP 2 561 011 B1**
(45) Date de publication et mention de la délivrance du brevet: **06.01.2016**
(21) Numéro de dépôt: 11719349.0
(22) Date de dépôt: 11.04.2011
(51) Int. Cl.: B82Y 30/00, C08L 9/02, C08L 21/00, C08L 33/00, H01B 1/24, C08J 5/00, C08K 3/04

(54) **MATERIAU COMPOSITE THERMOPLASTIQUE ET/OU ELASTOMERIQUE A BASE DE NANOTUBES DE CARBONE ET DE GRAPHENES**
THERMOPLASTISCHE UND/ODER ELASTOMERISCHE VERBUNDMATERIALIEN AUF DER BASIS VON KOHLENSTOFFNANORÖHREN UND GRAPHENEN
THERMOPLASTIC AND/OR ELASTOMERIC COMPOSITE MATERIAL BASED ON CARBON NANOTUBES AND GRAPHENES

(30) Priorité: 22.04.2010 FR 1053088
(43) Date de publication de la demande: 27.02.2013
(73) Titulaire: Arkema France, 92700 Colombes (FR)
(72) Inventeur: PLEE, Dominique, Lima 33 (PE); KORZHENKO, Alexander, F-64000 Pau (FR)
(74) Mandataire: Bonnel, Claudine
(86) Numéro de dépôt international: PCT/FR2011/050815
(87) Numéro de publication internationale: WO 2011/131890

(56) Documents cités:
- EP-A1- 1 995 274
- WO-A2-2007/011684
- FR-A1- 2 826 968

## Description

La présente invention concerne des matériaux composites à base de nanotubes de carbone et de graphènes, leur procédé de préparation, ainsi que leur utilisation pour la fabrication de produits finaux composites.

Les nanotubes de carbone (ou NTC) possèdent des structures cristallines particulières, de forme tabulaire et creuses, constituées de l'enroulement d'un ou plusieurs feuillets unitaires de graphite. Dans le cas des nanotubes comportant plusieurs feuillets ou parois enroulés, l'enroulement est coaxial selon un axe longitudinal. Zon distingue ainsi les nanotubes mono-parois (Single Wall Nanotubes ou SWNT) et les nanotubes multi-parois (Multi Wall Nanotubes ou MWNT).

Les NTC peuvent être préparés par des méthodes connues. Il existe plusieurs procédés de synthèse de NTC, notamment la décharge électrique, l'ablation laser et le dépôt chimique en phase vapeur ou CVD (Chemical Vapour Deposition) qui permet d'assurer la fabrication en grande quantité de nanotubes de carbone et donc leur obtention à un prix de revient compatible avec leur utilisation massive. Le procédé CVD consiste précisément à injecter une source de carbone à relativement haute température sur un catalyseur qui peut lui-même être constitué d'un métal tel que le fer, le cobalt, le nickel ou le molybdène, supporté sur un solide inorganique tel que l'alumine, la silice ou la magnésie. Les sources de carbone peuvent comprendre le méthane, l'éthane, l'éthylène, l'acétylène, l'éthanol, le méthanol, voire un mélange de monoxyde de carbone et d'hydrogène (procédé HIPCO).

Les NTC sont produits par exemple par les sociétés Arkema, Nanocyl, Iljin et Showa Denko.

Les graphènes sont des feuillets de graphite isolés et individualisés, mais très souvent on appelle graphènes des assemblages comprenant entre un et quelques dizaines de feuillets. A la différence des nanotubes de carbone, ils présentent une structure plus ou moins plane avec des ondulations dûes à l'agitation thermique d'autant plus fortes que le nombre de feuillets se réduit. On distingue les FLG (Few Layer Graphene), les NGP (Nanosized Graphene Plates), les CNS (Carbon NanoSheets), les GNR ( Graphene NanoRibbons).

Divers procédés de préparation de graphènes ont été proposés dont celui de A.K. Geim à Manchester, consistant à arracher par couches successives des feuillets de graphites au moyen d'une bande adhésive (méthode « scotch-tape »), Geim, A.K., Science, (2004), 306, 666.

On peut aussi obtenir des particules de graphènes par coupure dé nanotubes de carbone le long de l'axe longitudinal (« Micro-Wave Synthesis of Large Few-Layer Graphene Sheets in Aqueous Solution of Ammonia »., Janowska, I. et al, NanoResearch, 2009 ou « Narrow Graphene nanoribbons from Carbon Nanotubes », Jiao, L. et al, Nature, vol. 458, p. 877-880, 2009. D'autres procédés ont été largement décrits dans la littérature.

Les graphènes sont produits par exemple par les sociétés Vorbeck Materials et Angstron Materials.

D'un point de vue mécanique, les NTC présentent à la fois une excellente rigidité (mesurée par le module d'Young), comparable à celle de l'acier, tout en étant extrêmement légers. En outre, ils présentent d'excellentes propriétés de conductivité électrique et thermique qui permettent d'envisager de les utiliser comme additifs pour conférer ces propriétés à divers matériaux, notamment macromoléculaires, tels que des matériaux polymériques thermoplastiques ou élastomériques.

Différentes approches ont été envisagées à ce jour pour disperser des quantités modérées de NTC dans des matrices polymères en vue notamment d'améliorer leur capacité de dissipation électrostatique sans affecter leurs propriétés mécaniques, et de permettre ainsi la fabrication, à partir de celles-ci, de composants électroniques ou de panneaux de revêtement pour l'industrie automobile, par exemple.

Par ailleurs, du point de vue industriel, il est souhaitable de pouvoir proposer des matériaux composites fortement dosés en NTC et susceptibles d'être dilués à la concentration voulue dans différentes matrices polymères.

Malheureusement, les NTC s'avèrent difficiles à manipuler et à disperser, en raison de leur faible taille, de leur pulvérulence et éventuellement, lorsqu'ils sont obtenus par la technique de CVD, de leur structure enchevêtrée générant par ailleurs de fortes interactions de Van der Waals entre leurs molécules.

La mauvaise dispersibilité des NTC affecte de manière importante les performances des composites qu'ils forment avec les matrices polymères dans lesquelles ils sont introduits. On observe en particulier l'apparition de nanofissures, se formant au niveau d'agrégats de nanotubes, qui conduisent à une fragilisation du composite. Par ailleurs, dans la mesure où les NTC sont mal dispersés, il est nécessaire d'augmenter leur taux pour atteindre une conductivité électrique et/ou thermique donnée.

La mauvaise dispersibilité des nanotubes de carbone est notamment observée dans le cas des matrices de polymères thermoplastiques et/ou élastomériques, en particulier lorsque le polymère est mis en oeuvre sous forme de granulés.

Pour remédier à ces inconvénients, il a déjà été proposé différentes solutions dans l'état de la technique.

Une solution, décrite dans le document WO 09/047466 de la Demanderesse, consiste à préparer un mélange-maître à partir de nanotubes de carbone sous forme de poudre et d'un polymère thermoplastique et/ou élastomérique sous forme de poudre, le mélange-maître se présentant lui-même sous une forme physique solide agglomérée telle qu'un granulé ; puis, ce mélange-maître peut être introduit dans une composition de polymère thermoplastique et/ou élastomérique.

Une autre solution consiste à réaliser une dispersion de NTC dans un solvant et un monomère et de procéder à une polymérisation *in situ* conduisant à l'obtention de NTC fonctionnalisés. Cette solution est toutefois complexe et peut s'avérer coûteuse en fonction des produits utilisés. Par ailleurs, les opérations de greffage risquent d'abîmer la structure des nanotubes et, par conséquent, leurs propriétés électriques et/ou mécaniques.

En outre, des tentatives ont été entreprises pour mélanger des NTC avec une matrice polymère thermoplastique dans un outil de compoundage classiquement utilisé pour l'obtention de composites à base de polymères thermoplastiques. Il a toutefois été observé que, dans ce cas, l'introduction d'une grande quantité (supérieure à 10% en poids) de NTC dans la matrice polymère avait généralement pour effet d'augmenter la viscosité du mélange dans l'outil de malaxage, résultant en un blocage de la vis du malaxeur qui nécessite de réduire la vitesse de ligne et affecte de ce fait négativement la productivité. En outre, la viscosification du matériau composite peut entraîner un auto-échauffement pouvant conduire à une dégradation du polymère et par suite, en présence de NTC, à la formation d'un revêtement polluant sur les parois des fourreaux et les vis du malaxeur. Il en résulte une pollution inacceptable du matériau composite, mais également une augmentation de la puissance consommée par le malaxeur (d'environ 10% sur 10 heures de malaxage), qui dépasse alors la limite de puissance de la machine et entraîne un arrêt intempestif de celle-ci. Le malaxeur doit alors être débloqué et nettoyé, entraînant ainsi un arrêt de la production.

Il a été suggéré dans la demande EP 1995274 de la Demanderesse de mettre en contact des nanotubes avec un agent plastifiant donné, pour former un pré-composite qui peut ensuite être introduit dans une matrice polymère. Cette solution diminue effectivement la viscosité du mélange, le couple dans l'extrudeuse et l'échauffement, mais a pour effet de diminuer la quantité de polymère.

Parallèlement, un certain nombre de travaux ont montré que l'on pouvait disperser des graphènes dans des matrices polymères. L'article « Graphene-based composite materials », de Stankovich et al, Nature, vol. 442, p. 282-286(2006) montre que l'on peut préparer des composites polystyrène-graphènes en mélangeant en voie solvant DMF, du polystyrène et des graphènes préalablement greffés par des groupes isocyanate de phényle. Après précipitation par ajout de méthanol et réduction, le composite est aggloméré par compression à chaud. Le seuil de percolation électrique est évalué à 0,1% vol. Pour une fraction de 0,5%, la conductivité est de 0,1 S/m. Cependant, cette méthode est lourde et coûteuse.

Il subsiste donc le besoin de disposer d'un procédé industriel simple et peu coûteux permettant de préparer en continu des matériaux composites renfermant des nanotubes de carbone, dans des matrices polymères, sans dégrader sensiblement les nanotubes ni la matrice, et sans polluer l'appareillage, tout en apportant une conductivité électrique à la matrice.

Afin d'apporter une réponse à ces besoins contradictoires, la Demanderesse s'est intéressée aux graphènes, ajoutés comme additifs dans une matrice polymérique, en sus des nanotubes, et a découvert que l'introduction d'une faible quantité de graphènes avait un effet synergique avec les nanotubes, à la fois sur les propriétés de conductivité électrique, mais aussi sur l'apport d'une fonction lubrifiante, susceptible de diminuer la viscosité des mélanges et donc l'énergie consommée au compoundage. Cet effet est, selon la Demanderesse, dû au facteur de forme bidimensionnel, différent de celui des nanotubes unidimensionnel. De plus, les mélanges nanotubes / graphènes permettent d'atteindre de meilleures conductivités thermiques que les nanotubes seuls.

Il est apparu à la Demanderesse qu'un matériau composite sous forme solide agglomérée comprenait des nanotubes de carbone et des graphènes dans une matrice polymérique pouvait être utilisé pour intégrer aisément des nanotubes de carbone dans différentes compositions de polymère thermoplastique et/ou élastomérique.

Selon un premier aspect, la présente invention concerne un matériau composite de nanotubes de carbone et de graphènes sous forme solide agglomérée comprenant :
a) des nanotubes de carbone dont le taux représente de 0,1% à 50% en poids, de préférence de 10% à 40% en poids par rapport au poids total du matériau composite ;
b) des graphènes dont le taux représente de 0,1% à 20% en poids, de préférence de 1% à 10% en poids par rapport au poids total du matériau composite ;
c) une composition polymérique comprenant au moins un polymère thermoplastique et/ou un élastomère.

Les nanotubes de carbone entrant dans la composition du matériau composite selon l'invention peuvent être de type mono-paroi, à double paroi ou à parois multiples. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456.

Les nanotubes mis en oeuvre selon l'invention ont habituellement un diamètre moyen allant de 0,1 à 200 nm, de préférence de 0,1 à 100 nm, plus préférentiellement de 0,4 à 50 nm et, mieux, de 1 à 30 nm, par exemple de 3 à 30 nm, et avantageusement une longueur de plus de 0,1 µm et avantageusement de 0,1 à 20 µm, par exemple d'environ 6 µm. Leur rapport longueur/diamètre est avantageusement supérieur à 10 et le plus souvent supérieur à 100. Ces nanotubes comprennent donc notamment les nanotubes dits "VGCF" (fibres de carbone obtenues par dépôt chimique en phase vapeur, ou Vapor Grown Carbon Fibers). Leur surface spécifique est par exemple comprise entre 100 et 300 m²/g et leur densité apparente peut notamment être comprise entre 0,01 et 0,5 g/cm³ et plus préférentiellement entre 0,07 et 0,2 g/cm³. Les nanotubes de carbone selon l'invention sont de préférence des nanotubes de carbone multi-parois et peuvent par exemple comprendre de 5 à 15 feuillets et plus préférentiellement de 7 à 10 feuillets. Ces nanotubes peuvent ou non être traités.

Un exemple de nanotubes de carbone bruts est notamment disponible dans le commerce auprès de la société ARKEMA sous la dénomination commerciale Graphistrength^{®} C100.

Les nanotubes peuvent être purifiés et/ou traités (en particulier oxydés) et/ou broyés, avant leur mise en oeuvre dans l'invention. Ils peuvent également être fonctionnalisés par des méthodes de chimie en solution comme l'amination ou la réaction avec des agents de couplage.

Le broyage des nanotubes peut être notamment effectué à froid ou à chaud et être réalisé selon les techniques connues mises en oeuvre dans des appareils tels que broyeurs à boulets, à marteaux, à meules, à couteaux, jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes peut être réalisée par lavage à l'aide d'une solution d'acide sulfurique, ou d'un autre acide, de manière à les débarrasser d'éventuelles impuretés minérales et métalliques résiduelles, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés. Une autre voie de purification des nanotubes, destinée en particulier à éliminer le fer et/ou le support catalytique qu'ils renferment, consiste à les soumettre à un traitement thermique à plus de 2000°C.

L'oxydation des nanotubes est par exemple réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est par exemple réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes peut être réalisée par greffage de motifs réactifs tels que des monomères vinyliques à la surface des nanotubes. Le matériau constitutif des nanotubes est utilisé comme initiateur de polymérisation radiculaire après avoir été soumis à un traitement thermique à plus de 900°C, en milieu anhydre et dépourvu d'oxygène, qui est destiné à éliminer les groupes oxygénés de sa surface. Il est ainsi possible de polymériser du méthacrylate de méthyle ou du méthacrylate d'hydroxyéthyle à la surface de nanotubes de carbone en vue de faciliter notamment leur dispersion dans le PVDF ou les polyamides.

On utilise de préférence dans la présente invention dés nanotubes bruts éventuellement broyés, c'est-à-dire des nanotubes qui ne sont ni oxydés ni purifiés ni fonctionnalisés et n'ont subi aucun autre traitement chimique et/ou thermique.

Selon l'invention, les NTC sont avantageusement sous forme de poudre.

Par ailleurs, on préfère selon l'invention utiliser des nanotubes de carbone obtenus à partir de matières premières d'origine renouvelable, en particulier d'origine végétale, comme décrit dans le document EP 1 980 530.

La quantité de nanotubes mise en oeuvre selon l'invention représente de 0,1% à 50% en poids, de préférence de 10 à 40% en poids, en particulier de 15% à 40% en poids, par exemple de 20% jusqu'à 35% en poids, par rapport au poids total du matériau composite.

La quantité de graphènes mise en oeuvre selon l'invention représente de 0,1% à 20% et de préférence de 1% à 10%, par exemple de 2% à 7% en poids par rapport au poids total du matériau composite. On peut utiliser comme graphènes par exemple les graphènes de moins de 10 nm d'épaisseur et de l'ordre du micron d'extension latérale, commercialisés sous la marque Vor-X par la sociétés Vorbeck Materials, ou les graphènes de la société Angstron Materials, de type NGP tels quels ou oxydés, qui présentent une épaisseur inférieure à 0,5 nm, 10 nm ou 100 nm, selon le nombre de feuillets, avec des dimensions latérales de l'ordre du micron.

Selon l'invention, les graphènes et les nanotubes de carbone (bruts ou broyés et/ou purifiés et/ou oxydés et/ou fonctionnalisées par une molécule non plastifiante) sont mis en contact avec au moins une composition polymérique comprenant au moins un polymère thermoplastique et/ou un élastomère. Le terme composition polymérique selon l'invention couvre également les oligomères, ainsi que les alliages de polymères thermoplastiques entre eux, d'élastomères entre eux, ou des uns avec les autres.

Par « polymère thermoplastique », on entend, au sens de l'invention, un polymère qui fond lorsqu'on le chauffe et qui peut être mis et remis en forme à l'état fondu.

Ce polymère thermoplastique peut notamment être choisi parmi : les homo- et copolymères d'oléfines tels que les copolymères acrylonitrile-butadiène-styrène, les copolymères styrène-butadiène-méthacrylate d'alkyle (ou SBM) ; le polyéthylène, le polypropylène, le polybutadiène et le polybutylène ; les homo- et copolymères acryliques et les poly(méth)acrylates d'alkyles tels que le poly(méthacrylate de méthyle) ; les homo- et copolyamides ; les polycarbonates ; les polyesters dont le poly(téréphtalate d'éthylène) et le poly(téréphtalate de butylène) ; les polyéthers tels que le poly(phénylène éther), le poly(oxyméthylène), le poly(oxyéthylène) ou poly(éthylène glycol) et le poly(oxypropylène) ; le polystyrène ; les copolymères de styrène et d'anhydride maléique ; le poly(chlorure de vinyle) ; les polymères fluorés tels que le poly(fluorure de vinylidène), le polytétrafluoréthylène et le polychlorotrifluoro-éthylène ; les caoutchoucs naturels ou synthétiques ; les polyuréthanes thermoplastiques ; les polyaryl éther cétones (PAEK) tels que la polyétheréthercétone (PEEK) et la polyéther cétoné cétone (PEKK) ; le polyétherimide ; la polysulfone ; le poly(sulfure de phénylène) ; l'acétate de cellulose ; le poly(acétate de vinyle) ; et leurs mélanges.

Selon une forme d'exécution particulière de l'invention, le polymère est un polycarbonate.

Selon une forme d'exécution particulière de l'invention, le polymère est choisi parmi les polymères fluorés tels que le poly(fluorure de vinylidène).

Selon une forme d'exécution particulièrement préférée de l'invention, le polymère est choisi parmi les homo- et copolyamides.

Parmi les homopolyamides (PA), on peut notamment citer le PA-6, le PA-11 et le PA-12, obtenus par polymérisation d'un aminoacide ou d'un lactame, le PA-6.6, le PA-4.6, le PA-6.10, le PA-6.12, le PA-6.14, le PA 6-18 et le PA-10.10 obtenus par polycondensation d'un diacide et d'une diamine, ainsi que les polyamides aromatiques tels que les polyarylamides et les polyphtalamides. Certains des polymères précités (PA-11, PA-12, PA aromatiques) sont notamment disponible auprès de la société ARKEMA sous la dénomination commerciale RILSAN^{®}.

Les copolyamides, ou copolymères de polyamide, peuvent être obtenus à partir de divers matériaux de départ : (i) lactames, (ii) acides aminocarboxyliques ou (iii) quantités équimolaires de diamines et d'acides dicarboxyliques. L'obtention d'un copolyamide nécessite de choisir au moins deux produits de départ différents parmi ceux cités précédemment. Le copolyamide comprend alors au moins ces deux motifs. Il peut ainsi s'agir d'un lactame et d'un acide aminocarboxylique ayant un nombre différent d'atomes de carbone, ou de deux lactames ayant des masses moléculaires différentes, ou encore d'un lactame combiné à une quantité équimolaire d'une diamine et d'un acide dicarboxylique. Les lactames (i) peuvent être en particulier choisis parmi le lauryllactame et/ou le caprolactame. L'acide aminocarboxylique (ii) est avantageusement choisi parmi les α,ω-aminoacides carboxyliques tels que l'acide 11-aminoundécanoïque ou l'acide 12-aminododécanoïque. De son côté, le précurseur (iii) peut notamment être une combinaison, d'au moins un diacide carboxylique aliphatique, cycloaliphatique ou aromatique en C₆-C₃₆, tel que l'acide adipique, l'acide azélaïque, l'acide sébacique, l'acide brassylique, l'acide n-dodécanedioïque, l'acide téréphtalique, l'acide isophtalique ou l'acide 2,6-naphtalène dicarboxylique avec au moins une diamine aliphatique, cycloaliphatique, arylaliphatique ou aromatique en C₄-C₂₂, telle que l'hexaméthylène diamine, la pipérazine, le 2-méthyl-1,5-diaminopentane, la m-xylylène diamine ou la p-xylyléne diamine ; étant entendu que lesdits diacide(s) carboxylique(s) et diamine(s) sont utilisés, lorsqu'ils sont présents, en quantité équimotaire. De tels copolyamides sont notamment commercialisés sous la dénomination commerciale Platamid^{®} par la société ARKEMA.

Selon une autre forme d'exécution de l'invention, le polymère thermoplastique peut être choisi parmi les copolymères styrène-butadiène-méthacrylate d'alkyle, notamment en C₁ à C₈ (ou SBM), en particulier :
1) les copolymères triblocs à base de polystyrène, de 1,4-polybutadiène et de poly(méthacrylate de méthyle)(PMMA), qui peuvent être obtenus par polymérisation anionique tel que décrit dans EP 0 524 054 et EP 0 749 987. Un exemple de tel copolymère renferme de 10 à 25% en poids de polystyrène (Mn = 10.000 à 30.000 g/mol par exemple), de 5 à 30% en poids de polybutadiène (Mn = 10.000 à 25.000 g/mol par exemple) et de 50 à 70% en poids de PMMA (Mn = 40.000 à 90.000 g/mol par exemple). De tels copolymères sont notamment disponibles sous forme de poudre auprès de la société ARKEMA sous la dénomination commerciale Nanostrength® E41 ;
2) les copolymères de type coeur-écorce constitués d'un coeur recouvert d'une ou plusieurs écorces, dont le coeur renferme un homo- ou copolymère de butadiène, de styrène et/ou de méthacrylate d'alkyle, notamment en C₁ à C₈, notamment un copolymère de butadiène et de styrène, et dont au moins une écorce, et de préférence chacune des écorces, renferme un homo- ou copolymère de styrène et/ou de méthacrylate d'alkyle, notamment en C₁ à C₈. Le coeur peut ainsi être revêtu d'une écorce intérieure en polystyrène et d'une écorce extérieure en PMMA. De tels copolymères coeur-écorce sont notamment décrits dans WO 2006/106214. Un copolymère coeur-écorce SBM utilisable dans la présente invention est notamment commercialisé par la société ARKEMA sous la dénomination commerciale Durastrength® E920.

La composition polymérique peut renfermer, outre le polymère thermoplastique, un plastifiant.

Par « plastifiant » on entend, au sens de la présente invention, un composé qui, introduit dans un polymère, augmente sa flexibilité, diminue sa température de transition vitreuse (Tg), augmente sa malléabilité et/ou son extensibilité.

Parmi les plastifiants utilisables selon l'invention, on peut notamment citer :
- les alkylesters de phosphates, d'acide hydroxybenzoïque (dont le groupe alkyle, de préférence linéaire, renferme de 1 à 20 atomes de carbone), d'acide laurique, d'acide azélaïque et d'acide pélargonique,
- les arylphosphates,
- les phtalates, notamment de dialkyle ou d'alkyl-aryle, en particulier d'alkylbenzyle, les groupes alkyles, linéaires ou ramifiés, renfermant indépendamment de 1 à 12 atomes de carbone,
- les résines nitriles,
- le poly(butylène : téréphtalate) cyclisé et les mélanges en contenant, tels que la résine CBT^{®} 100 commercialisée par CYCLICS CORPORATION,
- les adipates, notamment de dialkyles, par exemple de di(2-éthylhexyle),
- les sébacates, notamment de dialkyles et en particulier de dioctyle,
- les benzoates de glycols ou de glycérol,
- les éthers de dibenzyle,
- les chloroparaffines,
- les hydrocarbures amphiphiles fonctionnalisés tels que celui commercialisé par la société TRILLIUM SPECIALTIES sous la dénomination commerciale Trilsperse® 800,
- le carbonate de propylène,
- les sulfonamides, en particulier les alkyl sulfonamides, les aryl sulfonamides et les arylalkylsulfonamides, dont le groupe aryle est
- éventuellement, substitué par au moins un groupe alkyle contenant de 1 à 12 atomes de carbone, telles que les benzène sulfonamides et les toluène sulfonamides, lesdites sulfonamides pouvant être N-substituées ou N,N-disubstituées par au moins un groupe alkyle, de préférence linéaire, renfermant de 1 à 20 atomes de carbone, ledit groupe.:alkyle portant éventuellement un groupe alkylester, alkylamide ou (alkylester)alkyl amide,
- les sels de N-alkyl guanidine dont le groupe alkyle est de préférence linéaire et renferme de 6 à 16 atomes de carbone,
- les glycols tels que le propylène glycol, et
- leurs mélanges.

Parmi les plastifiants cités ci-dessus, ceux préférés pour une utilisation dans la présente invention comprennent les sulfonamides ; les arylphosphates les phtalates, les résines nitriles et leurs mélanges. Des exemples de tels plastifiants sont notamment : la N-butyl benzènesulfonamide (BBSA), la N-éthyl benzènesulfonamide (EBSA), la N-propyl benzènesulfonamide (PBSA), la N-butyl-N-dodécyl benzènesulfonamide (BDBSA), la N,N-diméthyl benzènesulfonamide (DMBSA), la para-méthylbenzène sulfonamide, l'ortho-toluènesulfonamide, la para-toluènesulfonamide, le résorcinol bis(diphényl phosphate), le bisphenol A bis(diphényl phosphate), le néopentylglycol bis(diphénylphosphate), le dioctyl phtalate, les glycols, le poly(butylène téréphtalate) cyclisé, les hydrocarbures amphiphiles fonctionnalisés, et leurs mélanges.

On peut également citer les plastifiants décrits dans la demande EP 1 873 200.

Le plastifiant peut être utilisé à raison de 0 à 400% en poids, de préférence de 50 à 200 % en poids, et plus préférentiellement de 75 à 150% en poids, par rapport au poids de nanotubes plus graphènes mis en oeuvre. Il peut ainsi représenter, par exemple, de 5 à 80% en poids et plus généralement de 10 à 30% en poids, par rapport au poids total du matériau composite.

Il est bien entendu que le choix du plastifiant utilisé selon la présente invention sera fonction de la nature chimique de la matrice polymérique à renforcer par les nanotubes. Le Tableau 1 ci-après donne à titre indicatif quelques exemples d'associations plastifiants/matrices polymères particulièrement appropriées.

**Tableau 1**

| **Exemples d'associations polymères/plastifiants** | |
|---|---|
| Type de polymère à renforcer | Exemple de plastifiant utilisable |
| Copolymère acrylonitrile-butadiène-styrène (ABS) | Alkylesters de phosphates, aryl phosphates, aryl sulfonamides, résine CBT^{®} 100 |
| Copolymère styrène-butadiène-méthacrylate d'alkyle | Phtalates, notamment de dioctyle ; résine nitrile |
| Polyméthacrylate de méthyle (PMMA) | Phtalates, notamment de di-(2-éthylhexyle), résine CBT^{®} 100 |
| Copolymère styrène-éthylène-butadiène-styrène (SEBS) | Phtalates, notamment de dioctyle |
| Copolymère éthylène-propylène-diène (EPDM) | Phtalates, notamment de dibutyle ou de dioctyle |
| Caoutchouc naturel (SBR) | Sébacates, notamment de dioctyl ; phtalates, notamment de dibutyle ou de dioctyle |
| Polybutylène | Adipates, phtalates, pélangonates |
| Polyamides | Sulfonamides, notamment BBSA, EBSA, PBSA, BDBSA, DMBSA ; hydroxybenzoates, tels que le 1-butyl-4-hydroxybenzoate ou l'hexadécyl-4-hydroxybenzoate ; phtalates, notamment de dioctyle ou de diisodécyle ; adipates, notamment de di-(2-éthylhexyle) ; phosphates, notamment de tri-(2-éthylhexyle) |
| Polycarbonates | Alkylesters de phosphates, arylphosphates, phtalates, résine CBT^{®} 100 |
| Polyesters (dont PET) | Glycols, phtalates |
| Polyphénylène éther | Glycols, phtalates, résine CBT^{®} 100 |
| Polystyrène | Phtalates, aryl phosphates, sébacates, adipates, azélates |
| Polyéthylène, PEG et copolymères de faible masse moléculaire | Phtalates, notamment de dioctyle ; benzoates de glycérol, notamment tribenzoate de glycéryle ; glycols ; polyéthylène de très faible masse |
| Polypropylène | Sébacates, notamment de dioctyle ; polypropylène de très faible masse |
| Poly(chlorure de vinyle) (PVC) | Phtalates de dialkyles, adipates de dialkyles, azélates, sébacates, résine CBT^{®} 100 |
| Polymère fluoré | Phtalates, adipates, azélates, sébacates |

Par élastomère, on entend, au sens de la présente invention, un polymère élastique c'est-à-dire un polymère qui supporte de très grandes déformations, très supérieures à 100% et (presque) totalement réversibles. Un élastomère est constitué de longues chaînes moléculaires rassemblées, au repos, en « pelotes ». Ces chaînes sont reliées entre elles par des points de réticulation, des enchevêtrements ou encore des liaisons polaires avec des charges minérales, et forment un réseau.

Il est bien entendu que certains des polymères utilisables selon le procédé de l'invention peuvent être simultanément thermoplastiques et élastomériques.

Du point de vue structural, les élastomères sont généralement constitués de chaînes polymériques reliées entre elles, pour former un réseau tridimensionnel. Plus précisément, on distingue parfois les élastomères thermoplastiques, dans lesquels les chaînes polymériques sont reliées entre elles par des liaisons physiques, telles que des liaisons hydrogène ou dipôle-dipôle, des élastomères thermodurcissables, dans lesquels ces chaînes sont reliées par des liaisons covalentes, qui constituent des points de réticulation chimique. Ces points de réticulation sont formés par des procédés de vulcanisation mettant en oeuvre un agent de vulcanisation qui peut par exemple être choisi, selon la nature de l'élastomère, parmi les agents de vulcanisation à base de soufre, en présence de sels métalliques de dithiocarbamates ; les oxydes de zinc combinés à de l'acide stéarique ; les résines phénol-formaldéhyde bifonctionnelles éventuellement halogénées, en présence de chlorure d'étain ou d'oxyde de zinc ; les peroxydes ; les amines ; les hydrosilanes en présence de platine ; etc.

La présente invention concerne plus particulièrement les élastomères éventuellement en mélange non réactifs, c'est-à-dire non vulcanisables (tels que les caoutchoucs hydrogénés).

Les élastomères peuvent notamment être choisis parmi : les polymères fluorocarbonés ou fluorosiliconés ; les résines nitriles ; les homo- et copolymères du butadiène, éventuellement fonctionnalisées par des monomères insaturés tels que l'anhydride maléique, l'acide (méth)acrylique, et/ou le styrène (SBR) ; le néoprène (ou polychloroprène) ; le polyisoprène ; les copolymère d'isoprène avec le styrène, le butadiène, l'acrylonitrile et/ou le méthacrylate de méthyle ; les copolymères à base de propylène et/ou d'éthylène et notamment les térpolymèrés à base d'éthylène, de propylène et de diènes (EPDM), ainsi que les copolymères de ces oléfines avec un (méth)acrylate d'alkyle ou l'acétate de vinyle ; les caoutchoucs butyle halogénés ; les résines de silicone ; les polyuréthanes ; les polyesters ; les polymères acryliques tels que le poly(acrylate de butyle) porteur de fonctions acide carboxylique ou époxy ; ainsi que leur dérivés modifiés ou fonctionnalisés et leurs mélanges, sans que cette liste ne soit limitative.

On préfère selon l'invention utiliser au moins un élastomère choisi parmi : les résines nitriles, en particulier les copolymères d'acrylonitrile et de butadiène (NBR) ; les résines de silicone, en particulier les poly(diméthylsiloxanes) porteurs de groupes vinyliques ; les polymères fluorocarbonés, en particulier les copolymères d'hexafluoropropylène (HFP) et de difluorure de vinylidène (VF2) ou les terpolymères d' d'hexafluoropropylène (HFP), de difluorure de vinylidène (VF2) et de tétrafluoroéthylène (TFE), chaque monomère pouvant représenter plus do 0% et jusqu'à 80% du terpolymère ; et leurs mélanges.

La composition polymérique mise en oeuvre selon l'invention peut renfermer divers additifs, destinés en particulier à favoriser la dispersion ultérieure du matériau composite dans une formulation liquide, tels que des dispersants polymériques, en particulier la carboxyméthyl cellulose, les polymères acryliques, le polymère vendu par la société LUBRIZOL sous la dénomination commerciale Solplus® DP310 et les hydrocarbures amphiphiles fonctionnalisés tels que celui commercialisé par la société TRILLIUM SPECIALTIES sous la dénomination commerciale Trilsperse® 800, des tensioactifs tels que le dodécyl benzène sulfonate de sodium, et leurs mélanges. La composition polymérique peut également renfermer des charges, par exemple des charges autres que des nanotubes (notamment des fullerènes), de la silice ou du carbonate de calcium. Elle peut également contenir des filtres UV, notamment à base de dioxyde de titane, et/ou des retardateurs de flamme. Elle peut en variante ou en plus contenir au moins un solvant du polymère thermoplastique.

Le matériau composite de nanotubes de carbone et de graphènes selon l'invention est sous forme solide agglomérée. On entend par «forme solide agglomérée» dans le cadre de la présente invention, une forme dure, par exemple sensiblement cylindrique, sphérique ovoïde, rectangulaire ou prismatique. On peut citer, par exemple, des granulés, des pastilles et des galets en tant que formes physiques solides agglomérées. Le diamètre de cette forme physique solide agglomérée peut être compris entre 1 mm et 10 mm, mais plus préférentiellement entre 2 mm et 4 mm.

Selon un second aspect, l'invention concerne un procédé de préparation dudit matériau composite comprenant :
(i) le mélange de nanotubes de carbone, de graphènes et d'une composition polymérique comprenant au moins un polymère thermoplastique et/ou un élastomère, le taux de nanotubes de carbone représentant de 0.1% à 50% en poids et le taux de graphènes représentant de 0,1 à 20% en poids par rapport au poids du mélange total ;
(ii) éventuellement, la transformation dudit mélange sous une forme physique solide agglomérée ; et
(iii) la récupération du matériau composite.

Un premier mode de réalisation de l'étape (i) consiste à mélanger des NTC et des graphènes sous forme de poudre, avec une composition polymérique sous forme d'un mésange poudre / granulés allant de 10:90 à 100:0 ; de préférence le polymère thermoplastique ou l'élastomère se trouve majoritairement sous forme de poudre, plutôt que de granulés. La Demanderesse a en effet démontré qu'il en résultait une meilleure dispersion du graphène et des nanotubes dans la matrice polymère. En pratique, on pourra utiliser un mélange de polymère sous forme de poudre et de polymère sous forme de granulés, dans un rapport pondéral du polymère sous forme de poudre au polymère sous forme de granulés allant de 70:30 à 100:0, plus préférentiellement de 90:10 à 100:0.

La taille moyenne des particules de la poudre de composition polymérique est, généralement, comprise entre 0,1 µm et 1000 µm, de préférence entre 10 µm et 800 µm, et encore plus préférentiellement entre 50 µm et 300 µm. Avantageusement, la taille moyenne des particules de la poudre de composition polymérique est comprise entre 100 µm et 150 µm.

Pour obtenir cette poudre de polymère, il est possible, par exemple, de broyer à la taille voulue des granulés, de polymère disponibles dans le commerce.

Les poudres de NTC, de graphènes et de composition polymérique peuvent être mélangées dans un mélangeur qui est soit intégré à l'appareil de mise en oeuvre, soit disposé en amont de celui-ci.

Ce mélange de poudres peut être réalisé dans des réacteurs de synthèse traditionnels, des mélangeurs à pales, des réacteurs à lit fluidisé ou dans des appareils de mélange de type Brabender, mélangeur bras en z ou extrudeuse. Selon une variante de l'invention, on peut ainsi utiliser un mélangeur à pales ou à bras.

Cette première étape de mélange à sec de poudres ou dry-blend est de préférence suivie d'une étape de traitement thermique où a lieu le passage du polymère sous forme liquide ou gazeuse afin d'assurer un mélange intime et homogène du polymère avec les NTC et les graphènes. Ce traitement thermique consiste en une montée en température de la poudre de telle sorte que ses propriétés physicochimiques sont modifiées. Ce traitement thermique est avantageusement réalisé dans une extrudeuse.

La transformation en une forme solide agglomérée de la seconde étape (ii) du procédé selon l'invention peut être réalisée par toute méthode connue de l'homme du métier.

Notamment, on peut citer l'agglomération en lit fluidisé qui est une méthode classique pour l'obtention de granulés à partir de poudre. La poudre fluidisée est humidifiée jusqu'à ce que des ponts liquides se forment entre les particules. Eau, solutions, suspensions ou matières fondues peuvent être pulvérisées pour atteindre la qualité de produit souhaitée. Grâce à cette technologie, le taux de fines est considérablement réduit, la fuidité et la capacité de dispersion dans l'eau sont améliorées, les granulés obtenus sont très aérés et se dissolvent très facilement. Le procédé d'agglomération, par son action, résout les problèmes de stabilité des mélanges poudreux.

Une autre méthode de mise en oeuvre est la granulation par pulvérisation qui est un procédé simultané. Les granulés se forment lors de l'évaporation du fluide. Ces granulés sont plus durs et plus denses que par agglomération.

On peut en variante utiliser une méthode de granulation en phase humide qui consiste à introduire la poudre dans un granulateur vertical et à l'humidifier abondamment par pulvérisation. Le mélange est alors vigoureusement brassé par une turbine et un hacheur. Dans ce procédé où la poudre est compressée, il en résulte des granulés plus denses que par agglomération en lit fluidisé.

Une autre méthode utilisable est le procédé d'injection compression qui consiste à injecter une galette de matière à l'état fondu que l'on comprime ensuite pour remplir un moule. On obtient alors un produit solide comprimé.

Dans une forme d'exécution avantageuse du procédé selon l'invention, les étapes (i) et (ii) sont basées sur un procédé de compoundage qui est un procédé continu comprenant des étapes de malaxage, de refroidissement et de granulation. Le mélange de NTC, de graphènes et de composition polymérique arrive en tête d'une extrudeuse ou dans un premier segment de celle-ci et est versé dans la trémie pour alimenter la vis de l'extrudeuse, qui est de préférence une extrudeuse bi-vis ou un co-malaxeur. Dans l'extrudeuse, le mélange est chauffé et ramolli, grâce à une vis sans fin qui se trouve dans un fourreau (tube) chauffé pour rendre le matériau malléable. La vis entraîne le matériau vers la sortie. La tête de sortie de l'extrudeuse donne sa forme au matériau sortant. Le tube ou jonc sort en continu, il est refroidi pour être ensuite découpé en granulés.

Ainsi, un second mode de réalisation de l'étape (i) du procédé selon l'invention, particulièrement adapté pour un matériau composite à base d'un polymère thermoplastique, consiste à réaliser le mélange des NTC et des graphènes avec le polymère thermoplastique se trouvant à l'état fondu en présence ou non d'un plastifiant, la matière fondue sortant généralement de l'appareillage utilisé directement sous une forme physique solide agglomérée, sans qu'il soit nécéssaire de mettre en oeuvre une étape (ii) supplémentaire.

Dans ce mode de réalisation, l'étape (i) comprend l'introduction, dans un dispositif de compoundage, d'une composition polymérique renfermant au moins un polymère thermoplastique, des graphènes et des nanotubes, la fusion du polymère thermoplastique, puis le mélange du polymère thermoplastique fondu, des graphènes et des nanotubes, un plastifiant pouvant être ajouté au mélangeur, dans un rapport pondéral de 0 à 400% en poids, de préférence de 50 à 200% par rapport au poids de nanotubes plus graphènes mis en oeuvre, et au moins 50% du poids dudit plastifiant étant introduit en amont de, ou dans, la zone de fusion du polymère.

Par "dispositif de compoundage", on entend, selon l'invention, un appareillage classiquement utilisé dans l'industrie des matières plastiques pour le mélange à l'état fondu de polymères thermoplastiques et d'additifs en vue de produire des composites. Dans cet appareillage, la composition polymérique et les additifs sont mélangés à l'aide d'un dispositif à fort cisaillement, par exemple une extrudeuse à double vis co-rotatives, un co-malaxeur ou un mélangeur interne ou externe. La matière fondue sort généralement de l'appareillage directement sous une forme physique solide agglomérée, par exemple sous forme de granulés, ou sous forme de joncs qui, après refroidissement, sont découpés en granulés.

Des exemples de co-malaxeurs utilisables selon l'invention sont les co-malaxeurs BUSS^{®} MDK 46 et ceux de la série BUSS^{®} MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxée. L'arbre est entraîné en rotation, et pourvu d'un mouvement d'oscillation dans la direction axiale, par un moteur. Ces co-malaxeurs peuvent être équipés d'un système de fabrication de granulés, adaptés par exemple à leur orifice de sortie, qui peut être constitué d'une vis d'extrusion ou d'une pompe.

Les co-malaxeurs utilisables selon l'invention ont de préférence un rapport de vis L/D allant de 7 à 22, par exemple de 10 à 20, tandis que les extrudeuses co-rotatives ont avantageusement un rapport UD allant de 15 à 56, par exemple de 20 à 50.

En outre, l'étape de compoundage est généralement mise en oeuvre à une température allant de 30 à 450°C, par exemple de 70 à 400°C. Cette température, qui est supérieure à température de transition vitreuse (Tg) dans le cas d'élastomères thermoplastiques amorphes et à la température de fusion, dans le cas de polymères thermoplastiques semi-cristallins, est fonction du polymère spécifiquement utilisé et généralement mentionnée par le fournisseur du polymère.

Comme indiqué plus haut, lorsqu'un plastifiant est mis en oeuvre, au moins 50% du poids du plastifiant est introduit dans le dispositif de compoundge en amont de, ou dans, la zone de fusion du polymère.

Dans une forme d'exécution de l'invention, plus particulièrement adaptée aux plastifiants liquides, le plastifiant est introduit en tout ou partie au début de la zone de fusion du polymère. On préfère en général introduire de 50 à 100%, par exemple de 60 à 80% en poids, du plastifiant dans cette zone et de 0 à 50% du poids, par exemple de 20 à 40% en poids, du plastifiant en aval de la zone de fusion du polymère.

Dans une autre forme d'exécution de l'invention, le plastifiant, le polymère thermoplastique les graphènes et les nanotubes peuvent en variante être introduits simultanément ou successivement dans la même trémie d'alimentation, du dispositif de compoundage. On préfère en général introduire l'intégralité du plastifiant dans cette trémie. Les matériaux précités peuvent être introduits successivement, dans un ordre quelconque, soit directement dans la trémie, soit dans un récipient approprié où ils sont homogénéisés avant d'être introduits dans la trémie. Dans cette forme d'exécution, le polymère se trouve sous forme d'un mélange poudre / granulés allant de 10:90 à 100:0, de préférence le polymère se trouve majoritairement sous forme de poudre, plutôt que de granulés. Cette forme d'exécution de l'invention est bien adaptée aux plastifiants solides. Ceux-ci peuvent éventuellement être introduits dans la trémie d'alimentation du dispositif de compoundage sous forme de pré-composite avec les graphènes et les nanotubes. Un tel pré-composite, renfermant 70% en poids de poly(butylène téréphtalate) cyclisé comme plastifiant et 30% en poids de nanotubes multi-parois, est par exemple disponible dans le commerce auprès de la société ARKEMA sous la dénomination commerciale Graphistrength® C M12-30., auquel on peut ajouter des graphènes. Une autre manière d'opérer peut consister à préparer à l'avance un prémélange à sec nanotubes - graphènes, prémélange qui sera ensuite dosé dans la matrice polymérique.

Cette forme d'exécution de l'invention peut toutefois être également mise en oeuvre dans le cas où le plastifiant se trouve à l'état liquide. Dans ce cas, les graphènes, les nanotubes et le plastifiant peuvent être introduits dans la trémie ou le récipient précité sous forme de pré-composite. Un tel pré-composite peut par exemple être obtenu suivant un procédé impliquant :
1- la mise en contact d'un plastifiant sous forme liquide, éventuellement à l'état fondu ou en solution dans un solvant, avec les graphènes et les nanotubes en poudre, par exemple par dispersion ou introduction directe par déversement du plastifiant dans le mélange de poudre de graphènes et de nanotubes (ou le contraire), par introduction goutte-à-goutte du plastifiant dans la poudre ou par nébulisation du plastifiant à l'aide d'un pulvérisateur sur le mélange de poudre de nanotubes et de graphènes, et
2- le séchage du pré-composite obtenu, éventuellement après élimination du solvant (typiquement par évaporation).

La première étape 1- ci-dessus peut être réalisée dans des réacteurs de synthèse traditionnels, des mélangeurs à pales, des réacteurs à lit fluidisé ou dans des appareils de mélange de type Brabender, mélangeur bras en Z ou extrudeuse. On préfère généralement utiliser un mélangeur conique, par exemple de type Vrieco-Nauta d'HOSOKAWA, comprenant une vis rotative tournant le long de la paroi d'une cuve conique ou un co-malaxeur.

En variante, un pré-composite peut être formé à partir du plastifiant liquide et du polymère thermoplastique, avant mélange avec les graphènes et les nanotubes.

Un troisième mode de réalisation de l'étape (i) particulièrement adapté pour un matériau composite à base d'élastomère, consiste à malaxer des nanotubes de carbone et des graphènes avec une composition polymérique liquide comprenant au moins un élastomère, au sein d'un dispositif de compoundage.

Ce dispositif de compoundage est de préférence un co-malaxeur.

La composition polymérique contenant l'élastomère se présente sous forme liquide lors de son injection dans le dispositif de compoundage dans une première zone avant l'introduction des NTC. Par "liquide", on entend que la composition est susceptible d'être pompée dans le dispositif de compoundage, c'est-à-dire qu'elle présente avantageusement une viscosité dynamique allant de 0,1 à 30 Pa.s, de préférence de 0,1 à 15 Pa.s. La viscosité peut être déterminée à l'aide de viscoélasticimètres comme les appareils RDA2, RSA2, DSR200, ARES ou RME du constructeur Rheometrics, ou MCR301 de Anton Paar, en suivant méthodologiquement les étapes décrites dans les manuels d'utilisation.

L'élastomère peut lui-même présenter cette viscosité soit à température ambiante (23°C), soit après avoir été chauffé avant injection dans le co-malaxeur pour lui conférer la viscosité voulue. L'homme du métier saura identifier de tels élastomères, en fonction notamment de la masse moléculaire de leurs polymères constitutifs. Dans une variante de l'invention, l'élastomère peut être solide, par exemple sous forme de gomme. Dans ce cas, la composition polymérique peut contenir, outre cet élastomère, au moins un auxiliaire de traitement sous forme liquide ou cireuse, tel qu'un fluoropolymère, notamment un perfluoropolyéther éventuellement fonctionnalisé et/ou un copolymère de fluorure de vinylidène et d'hexafluoropropylène.

Dans une autre variante, l'élastomère peut être introduit sous la forme solide, par exemple sous forme de particules broyées dans le co-malaxeur et liquéfié dans le co-malaxeur par le chauffage et le cisaillement avant l'introduction des NTC et des graphènes.

Au terme du procédé selon l'invention, on récupère un matériau composite sous une forme physique solide agglomérée comportant une forte teneur en NTC et des graphènes.

Ce matériau composite peut soit être utilisé tel quel, soit être utilisé comme mélange-maître et donc dilué dans une matrice polymère pour former un produit final composite.

L'invention a également pour objet l'utilisation du matériau composite décrit précédemment pour la fabrication d'un produit final composite et/ou en vue de conférer au moins une propriété électrique, mécanique et/ou thermique à une matrice polymère. Une étape de chauffage peut être réalisée pour fixer les propriétés électriques, mécaniques et/ou thermiques du produit final composite par tout moyen connu, par exemple par micro-ondes.

Elle a encore pour objet un procédé de fabrication d'un produit composite comprenant :
- la fabrication d'un matériau composite suivant le procédé décrit précédemment, et
- l'introduction du matériau composite dans une matrice polymère.

Ce procédé peut comporter une étape de mise en forme finale du produit composite selon l'utilisation envisagée.

Dans une forme d'exécution de l'invention, le dispositif de compoundage, dans lequel est fabriqué le matériau composite, peut être couplé à un autre dispositif destiné à être alimenté, d'une part, par le matériau composite et, d'autre part, par la matrice polymère. Cet autre dispositif peut dans ce cas être pourvu d'une filière de mise en forme du produit composite formé.

Dans cette forme d'exécution de l'invention, le produit final composite peut contenir de 0,1 à 8% en poids de graphènes et, par exemple de 0,1 à 20% en poids de nanotubes.

Dans une autre forme d'exécution de l'invention, le produit final composite peut contenir de 0,1 à 4% en poids de graphènes et par exemple de 0,1 à 10% en poids de nanotubes.

La matrice polymère contient généralement au moins un polymère choisi parmi les homo- ou copolymères à gradients, à blocs, statistiques ou séquencés, thermoplastiques, thermodurcissables, rigides ou élastomériques, cristallins, amorphes ou semi-cristallins. On utilise de préférence selon l'invention au moins un polymère thermoplastique et/ou un élastomère, qui peut notamment être choisi parmi ceux listés précédemment.

Dans le cas où le matériau composite préparé tel que décrit précédemment contient un polymère de type polystyrène-polybutadiène-poly(méthacrylate d'alkyle en C₁ à C₈) ou SBM, la matrice polymère peut notamment inclure un polymère tel que le poly(chlorure de vinyle) ou PVC.

La matrice polymère peut en outre renfermer divers adjuvants et additifs tels que des lubrifiants, des pigments, des stabilisants, des charges ou renforts, des agents anti-statiques, des fongicides, des agents ignifugeants et des solvants.

Le produit final composite selon l'invention peut être utilisé pour la fabrication de dispositifs de transport ou de stockage de fluides, tels que des tuyaux, des réservoirs, des conduites off-shore ou des durites, par exemple, en vue d'éviter l'accumulation de charges électrostatiques. En variante, ce produit composite peut être utilisé pour la fabrication d'électrodes compactes ou poreuses, notamment de supercapacités ou dé batteries.

Dans certaines formes d'exécution de l'invention, le matériau composite selon l'invention peut être utilisé pour viscosifier et/ou épaissir une formulation liquide, contenant ou non une matrice polymère. Cette formulation liquide renferme alors au moins un solvant du polymère thermoplastique. Par exemple, dans le cas où le polymère thermoplastique est un poly(éthylène glycol) hydrosoluble, la formulation liquide peut contenir de l'eau. L'invention offre ainsi un moyen pour viscosifier et/ou épaissir une formulation liquide, contenant au moins un solvant du polymère thermoplastique, notamment une composition d'encre, de vernis, de peinture, de mastic, de produit bitumineux ou de béton, par exemple. Elle a donc également pour objet l'utilisation précitée du matériau composite décrit précédemment.

Dans d'autres formes d'exécution, le matériau composite selon l'invention peut être utilisé pour fabriquer des fibres conductrices (obtenues en particulier par voie fondu) ou des films mono- ou multicouches conducteurs, c'est-à-dire présentant en général une résistivité électrique de 10⁻¹ à 10⁸ Ohm.cm. Il a en effet été mis en évidence que le procédé selon l'invention permettait d'obtenir des matériaux composites susceptibles d'être transformés notamment en fibres ou films extrudés présentant une meilleure conductivité électrique et d'aussi bonnes propriétés mécaniques que ceux de l'art antérieur,. Ces fibres peuvent notamment être employées dans la fabrication de textiles conducteurs. Dans ces applications, on préfère que le plastifiant soit choisi parmi : les oligobutyl (ou polybutylène) téréphtalates cycliques, les hydrocarbures amphiphiles fonctionnalisés, les alkyl sulfamides et leurs mélanges.

L'invention sera mieux comprise à la lumière des exemples non limitatifs et purement illustratifs suivants, en combinaison avec les figures annexées dans lesquelles :
- la Figure 1 illustre la courbe de résistivité en fonction de la température de produits matériaux finaux composites selon l'invention et de produits matériaux finaux composites comparatifs, à base de PA-12 ;
- la Figure 2 illustre la courbe de résistivité en fonction de la température d'un produit final composite obtenu selon l'invention et d'un produit final composite comparatif, à base de PA-6 ; et
- la Figure 3 illustre la courbe de résistivité en fonction de la température d'un produit final composite obtenu selon l'invention et d'un produit final composite comparatif, à base de polycarbonate.

### EXEMPLES

### Exemple 1 : Fabrication de matériaux composites NTC/graphènes/polyamide 12

On a introduit quatre formulations 1A et 1C(comparatives) et 1B et 1D, (selon l'invention), dont la composition est indiquée dans le Tableau 2, dans un co-malaxeur BUSS^{®} MDK 46 (UD = 11).

Les graphènes proviennent de la société Angstron sous la référence N006-010.

Les ingrédients des formulations 1A et 1B, tous solides, ont été introduits dans une seule trémie.

Les ingrédients de 1C et 1D ont été en partie introduits dans la même trémie (polyamide et nanotubes) et en partie injectés avec une pompe de dosage volumétrique dans la première zone du co-malaxeur (BBSA), ce qui correspond au début de la fusion du polymère.

**Tableau 2**

| | 1A comp | 1B | 1C comp | 1D |
|---|---|---|---|---|
| Nanotubes : NTC (Graphistrength^{®} C100 d'ARKEMA) | 20% | 15% | 20% | 15% |
| Polymère 1 : PA-12 (Rilsan^{®} AMNO TLD poudre d'ARKEMA, 150-300 µm) | 75% | 75% | 50% | 65% |
| Polymère 2 : PA-12 (Rilsan^{®} AMNO TLD granulés d'ARKEMA) | 5% | 5% | 5% | 5% |
| Graphènes | -- | 5% | -- | 5% |
| Plastifiant BBSA (liquide) | -- | -- | 25% | 10% |

Les consignes de température et le débit étaient identiques pour les formulations (zone 1/zone 2 du co-malaxeur : 280/290°C ; débit = 13 kg/h).

On a observé que la formulation 1A était plus visqueuse et entraînait une consommation de puissance de 5,8-5,9 kW pour le co-malaxeur, donc proche de la puissance nominale indiquée par le fabricant (6,0 kW). En outre, la température de la matière dans la dernière zone du co-malaxeur montait à 315°C environ.

Au contraire, la puissance consommée par les formulations 1B à 1D, moins visqueuses, étaient comprises entre 4,9 kW et 5,5 KW seulement et les conditions de production restaient stables. La température de la matière dans la dernière zone du co-malaxeur n'était que de 290-300°C.

Par ailleurs, on a observé que la formulation 1A générait des dépôts dans le co-malaxeur, contrairement aux formulations 1B à 1D.

Il ressort de cet exemple que le procédé selon l'invention permet de fabriquer un matériau composite fortement dosé en nanotubes de carbone dans des conditions plus douces qu'un procédé n'employant pas les graphènes. On confirme de plus que les graphènes peuvent au moins remplacer pour partie le BBSA comme plastifiant. Ce procédé permet donc de fabriquer en continu des matériaux composites sans dégrader la matrice polymère ni générer de pollution inacceptable de l'appareillage.

### Exemple 2 : Fabrication de produits composites à partir de matériaux composites NTC/graphènes/polyamide 12

Les matériaux composites 1A, 1 B, 1C et 1 D de l'Exemple 1 ont été dilués dans le PA-12, dans une extrudeuse bi-vis co-rotative (diamètre : 16 mm ; UD = 25), à différentes températures, de façon à obtenir des produits composites à 2% en poids de NTC (1A et 1C) ou 1,5% en poids de nanotubes plus 0,5% en poids de graphènes (1B et 1D).

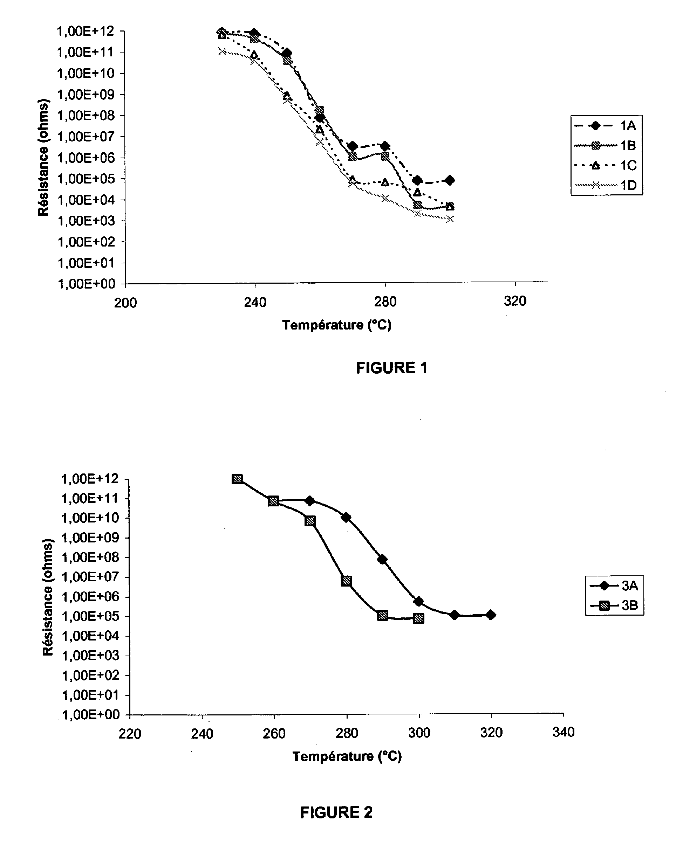

On a ensuite mesuré la résistivité des produits composites obtenus et tracé la courbe illustrée à la Figure 1.

Comme il ressort de cette Figure, dans la fenêtre de procédé, soit 230-290°C, les produits composites fabriqués selon l'invention 1 B et 1 D (nanotubes plus graphènes) présentent des propriétés de conduction électrique à une plus basse température que les produits composites comparatifs 1A et 1C (nanotubes seuls). L'invention permet donc l'obtention de produits composites dans des conditions de procédé plus douces, préservant la matrice polymère.

Des résultats tout-à-fait similaires ont été obtenus en remplaçant le PA-12 des Exemples 1 et 2 par du PA-11 (Rilsan^{®} BMNO TLD D'ARKEMA).

### Exemple 3 : Fabrication de matériaux composites NTC/graphènes/polyamide 6

On a introduit deux formulations 3A (comparative) et 3B (selon l'invention), dont la composition est indiquée dans le Tableau 3, dans un co-malaxeur BUSS^{®} MDK 46 (L/D = 11).

**Tableau 3**

| | Formulation 3A | Formulation 3B |
|---|---|---|
| Nanotubes : NTC (Graphistrength^{®} C100 d'ARKEMA) | 20% | 15% |
| Polymère 1 : PA-6 (Grade Domamid^{®} 24 poudre de DOMO CHEMICALS, 150-300 µm) | 75% | 75% |
| Polymère 2 : PA-6 (Grade Domamid^{®} 24 granulés de DOMO CHEMICALS) | 5% | 5% |
| graphènes | -- | 5% |

Les ingrédients des formulations, tous solides, ont été introduits dans une seule trémie. Les consignes de température et le débit étaient identiques pour les deux formulations (zone 1/zone 2 du co-malaxeur : 290/290°C ; débit = 11 kg/h).

On a observé que la formulation 3A était plus visqueuse et entraînait une consommation de puissance de 5,7-5,8 kW pour le co-malaxeur, qui dépassait après 10h de compoundage la puissance nominale indiquée par le fabricant (6,0 kW), nécessitant ainsi d'abaisser le débit à 10 kg/h. En outre, la température de la matière dans la dernière zone du co-malaxeur montait à 320°C. environ.

Au contraire, la puissance consommée par la formulation 3B, moins visqueuse, était de 5,5-5,6 kW seulement et les conditions de production restaient stables. La température de la matière dans la dernière zone du co-malaxeur n'était que de 300°C. En outre, on ne retrouvait pas de pollution sur les parois de la machine, contrairement au procédé utilisant la formulation 3A.

Il ressort de cet exemple que le procédé selon l'invention permet de fabriquer en continu des matériaux composites fortement dosés en NTC sans dégrader la matrice polymère ni polluer l'appareillage.

### Exemple 4 : Fabrication de produits composites à partir de matériaux composites NTC/graphènes/polyamide 6

Les matériaux composites de l'Exemple 3 ont été dilués dans le PA-6, dans une extrudeuse bi-vis co-rotative (diamètre : 16 mm ; L/D = 25), à différentes températures, de façon à obtenir des produits composites à 3% en poids de nanotubes (3A) ou 2,25% en poids de nanotubes plus 0,75% en poids de graphènes (3B).

On a ensuite mesuré la résistivité des produits composites obtenus et tracé la courbe illustrée à la Figure 2.

Comme il ressort da cette Figure, la mise en oeuvre du matériau composite fabriqué selon l'invention permet de réduire de 20°C la température de fabrication du produit composite, tout en conférant à ce dernier les mêmes propriétés de dissipation électrostatique.

### Exemple 5 : Fabrication de matériaux composites NTC/graphènes/polycarbonate

On a introduit deux formulations 5A (comparative) et 5B (selon l'invention), dont la composition est indiquée dans le Tableau 4, dans un co-malaxeur BUSS^{®} MDK 46 (L/D = 11).

**Tableau 4**

| | Formulation 5A | Formulation 5B |
|---|---|---|
| Nanotubes : NTC (Graphistrength^{®} C100 d'ARKEMA) | 15% | 15% |
| Polymère 1 : polycarbonate (Grade Makrolon^{®} 2207 poudre de BAYER, 150-300 µm) | 80% | 75% |
| Polymère 2 : polycarbonate (Grade Makrolon^{®} 2207 granulés de BAYER) | 5% | 5% |
| Graphènes | -- | 5% |

Les ingrédients des formulations, tous solides, ont été introduits dans une seule trémie. Les consignes de température étaient similaires pour les deux formulations (zone 1/zone 2 du co-malaxeur : 300/260°C et 310/270°C).

On notera qu'il n'a pas été possible de porter à 20% le taux de NTC dans la formulation 5A, sans entraîner de dégradation du Matériau composite formé. En outre, même au taux de NTC testé, la température matière dépassait 320°C pour un débit très modéré de 10-11 kg/h.

Au contraire, en utilisant la formulation 5B qui contenait pourtant 20% en poids de solide (NTC + graphènes), la production restait stable durant 40h environ à un débit de 15 kg/h, sans que la température matière ne dépasse 300°C.

Il ressort de cet exemple que le procédé selon l'invention permet de fabriquer en continu des matériaux composites fortement dosés en NTC/graphènes sans dégrader la matrice polymère.

Ces matériaux composites, telle que la Formulation 5B, peuvent être dilués jusqu'à 2-3% en poids de NTC dans une matrice polymère à base de polycarbonate, de résine ABS ou de copolymère ABS / styrène, pour la fabrication de matériaux conducteurs et ignifuges (c'est-à-dire ayant un indice V0 au test feu UL94 et LOI supérieur à 32%).

### Exemple 6 : Fabrication de produits composites à partir de matériaux composites NTC/graphènes/polycarbonate

Les matériaux composites de l'Exemple 5 ont été dilués dans du polycarbonate, dans une extrudeuse bi-vis co-rotative (diamètre : 16 mm ; L/D = 25), à différentes températures, de façon à obtenir des produits composites à 2% en poids de nanotubes (5A) ou 1,5 % en poids de nanotubes plus 0,5% en poids de graphènes (5B).

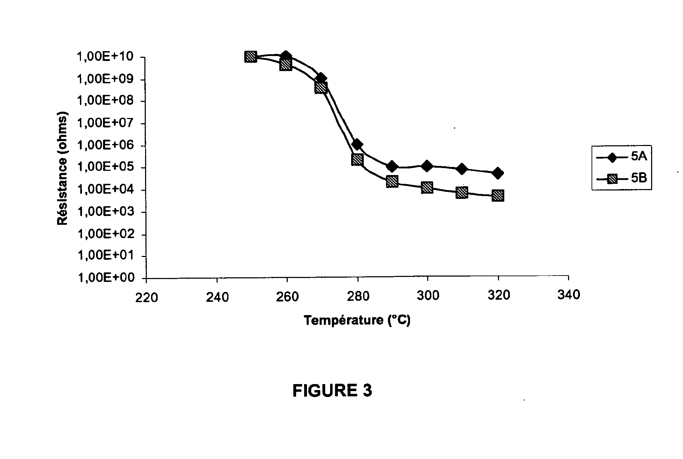

On a ensuite mesuré la résistivité des produits composites obtenus et tracé la courbe illustrée à la Figure 3.

Comme il ressort de cette Figure, la mise en oeuvre du matériau composite fabriqué selon l'invention permet de réduire de presque une décade la résistance du produit composite.

### Exemple 7 : Fabrication d'un matériau composite selon l'invention renfermant une base de résine nitrile

On a introduit, dans la première trémie d'alimentation d'un co-malaxeur BUSS^{®} MDK 46 (L/D = 11), équipé d'une vis d'extrusion et d'un dispositif de granulation, des nanotubes de carbone (Graphistrength^{®} C100 d'ARKEMA), des graphènes et une poudre de copolymère acrylique (Nanostrength^{®} M52N D'ARKEMA). Un copolymère butadiène-acrylonitrile (NIPOL^{®} 1312V de HALLSTAR) a été préchauffé à 160°C, puis injecté sous forme liquide à 190°C dans la 1^{ère} zone du co-malaxeur. Les consignes de température et le débit au sein du co-malaxeur étaient réglés à 200°C et 12 kg/h, respectivement. La vitesse de rotation de la vis était de 240 tours/min.

En sortie d'appareil, on a obtenu un jonc homogène qui a été découpé sous jet d'eau en des granulés constitués d'un matériau composite renfermant 35% en poids de NTC, 5% en poids de graphènes, 55% en poids de résine nitrile et 5% en poids de copolymère acrylique. Ces granulés ont ensuite été séchés à 50°C environ avant d'être conditionnés.

Ces granulés peuvent être ensuite dilués dans une matrice polymère contenant un agent de vulcanisation, et mis en forme.

En variante, une partie de la résine nitrile (de 5 a 10% en poids) peut être introduite dans le co-malaxeur sous forme solide, granulée ou broyée, par exemple dans la première trémie d'alimentation.

### Exemple 8 : Fabrication d'un Matériau composite selon l'invention renfermant une base de résine élastomérique siliconée

On introduit des nanotubes de carbone (Graphistrength^{®} C100 d'ARKEMA) et des graphénes dans la première trémie d'alimentation d'un co-malaxeur BUSS^{®} MDK 46 (L/D = 11) équipé d'une vis d'extrusion et d'un dispositif de granulation. Un polydiméthylsiloxane linéaire à extrémités vinyliques (Silopren^{®} U10 de MOMENTIVE) est introduit à une température de 40-60°C environ, pour partie dans la 1^{ère} zone du co-malaxeur et pour partie après le 1^{er} anneau de restriction du co-malaxeur. Le malaxage est réalisé à 90-110°C.

En sortie d'appareil, on a obtenu un jonc homogène qui a été découpé sous jet d'eau en des granulés constitués d'un matériau composite renfermant 30% en poids de NTC, 5% en poids de graphènes et 65% en poids de résine siliconée. Ces granulés ont ensuite été séchés à 50°C environ avant d'être conditionnés.

Ces granulés peuvent être ensuite dilués dans une matrice polymère contenant un agent de vulcanisation, par exemple dans une matrice siliconée pour la fabrication de joints d'étanchéité ou dans une matrice caoutchouc pour la fabrication de pneus.

### Exemple 9 : Fabrication d'un matériau composite selon l'invention renfermant une base de résine élastomérique fluorée

On a préparé, dans le même co-malaxeur que celui décrit à l'Exemple 8, une formulation renfermant : 30% en poids de nanotubes de carbone ; 5% en poids de graphènes ; 64% en poids de fluoroélastomère Viton^{®} A100 de DU PONT, utilisé sous forme de broyat de particules de 1-5 mm ; et 1% en poids d'un auxiliaire de traitement constitué d'un perfluoropolyéther fonctionnalisé commercialisé par la société SOLEXIS sous la dénomination commerciale Technoflon^{®} FPA1.

Les constituants de cette formulation ont tous été introduits dans la première trémie d'alimentation du co-malaxeur. Après malaxage à 160-180°C, on a obtenu un jonc de matériau composite, qui a été découpé en granulés.

Ce matériau composite peut être dilué dans une matrice polymère à température ambiante pour fabriquer un produit composite.

### Exemple 10 : Fabrication d'un matériau composite selon l'invention renfermant une base de résine élastomérique fluorée

On a préparé, dans le même co-malaxeur que celui décrit à l'Exemple 8, une formulation renfermant : 35% en poids de nanotubes de carbone ; 5% en poids de graphènes ; 39% en poids du même fluoroélastomère qu'à l'Exemple 10 ; 20% en poids de résine liquide de fluoroélastomère (copolymère de fluorure de vinylidène et d'hexafluoropropylène) commercialisée par la société DAIKIN AMERICA sous la dénomination commerciale Daikin^{®} DAI-EL G101 ; et 1% en poids du même auxiliaire de traitement qu'à l'Exemple 10.

Les constituants de cette formulation ont tous été introduits dans la première trémie d'alimentation du co-malaxeur, excepté la résine qui a été injectée à 160°C. Après malaxage à 160-180°C, on a obtenu un jonc de matériau composite, qui a été découpé en granulés.

Ce matériau composite peut être dilué dans une matrice polymère, notamment à base d'homo ou copolymères fluorés, pour fabriquer un produit composite. En variante, il peut être utilisé tel quel pour la fabrication de conduites de transport d'essence.

### Exemple 11 : Fabrication d'un matériau composite selon l'invention renfermant une base de résine élastomérique fluorée solide

On a introduit, dans la première trémie d'alimentation d'un co-malaxeur BUSS^{®} MDK 46 (UD = 11), équipé d'une vis d'extrusion et d'un dispositif de granulation, la résine VITON^{®} A100 sous forme de particules solides, dosées par le doseur gravimétrique, en utilisant un dispositif d'alimentation de bandes.

Des nanotubes de carbone (Graphistrength^{®} C100 d'ARKEMA) et des graphènes ont été introduits dans la 2^{ème} zone d'alimentation, après que la résine ait été liquéfiée dans 1^{ère} zone du co-malaxeur. Les consignes de température au sein du co-malaxeur étaient réglées à 150°C dans la Zone 1 et 140°C dans la Zone 2 et le débit était réglé à 12 kg/h. La vitesse de rotation de la vis était de 200 tours/min.

En sortie de la filière 4x4 mm, on a obtenu un jonc homogène qui a été découpé sous jet d'eau en des granulés constitués d'un matériau composite renfermant 18% en poids de NTC et 2% de graphénes. Ces granulés ont ensuite été séchés à 50°C environ avant d'être conditionnés.

Ces granulés peuvent être ensuite dilués dans une matrice polymère contenant un agent de vulcanisation, et mis en forme.

## Revendications

1. Matériau composite de nanotubes de carbone et de graphènes sous forme solide agglomérée comprenant:
a) des nanotubes de carbone dont le taux représente de 0,1% à 50% en poids, de préférence de 10% à 40% en poids par rapport au poids total du matériau composite
b) des graphènes dont le taux représente de 0,1% à 20% en poids, de préférence de 1% à 10% en poids par rapport au poids total du matériau composite
c) une composition polymérique comprenant au moins un polymère thermoplastique et/ou un élastomère.

2. Matériau composite selon la revendication 1 **caractérisé en ce que** les nanotubes de carbone sont multi-parois comprenant de 5 à 15 feuillets.

3. Matériau composite selon la revendication 1 ou 2 **caractérisé en ce que** la composition polymérique comprend un polymère thermoplastique choisi parmi les homo- et copolymères d'oléfines tels que les copolymères acrylonitrile-butadiène-styrène, les copolymères styrène-butadiène-méthacrylate d'alkyle (ou SBM) ; le polyéthylène, le polypropylène, le polybutadiène et le polybutylene; les homo- et copolymères acryliques et les poly(méth)acrylates d'alkyles tels que le poly(méthacrylate de méthyle) ; les homo- et copolyamides ; les polycarbonates ; les polyesters dont le poly(téréphtalate d'éthylène) et le poly(téréphtalate de butylène) ; les polyéthers tels que le poly(phénylène éther), le poly(oxyméthylène), le poly(oxyéthylène) ou poly(éthyléne glycol) et le poly(oxypropylène) ; le polystyrène ; les copolymères de styrène et d'anhydride maléique ; le poly(chlorure de vinyle) ; les polymères fluorés tels que le poly(fluorure de vinylidène), le polytétrafluoréthylène et le polychlorotrifluoro-éthylène ; les caoutchoucs naturels ou synthétiques ; les polyuréthannes thermoplastiques ; les polyaryl éther cétones (PAEK) tels que la polyétheréthercétone (PEEK) et la polyéther cétone cétone (PEKK) ; le polyétherimide ; la polysulfone le poly(sulfure de phénylène) ; l'acétate de cellulose ; le poly(acétate de vinyle) ; et leurs mélanges.

4. Matériau composite selon la revendication 3 caractérisé en que la composition polymérique comprend en outre un plastifiant choisi parmi :
- les alkylesters de phosphates, d'acide hydroxybenzoïque (dont le groupe alkyle, de préférence linéaire, renferme de 1 à 20 atomes de carbone), d'acide laurique, d'acide azélaïque et d'acide pélargonique,
- les arylphosphates,
- les phtalates, notamment de dialkyle ou d'alkyl-aryle, en particulier d'alkylbenzyle, les groupes alkyles, linéaires ou ramifiés, renfermant indépendamment de 1 à 12 atomes de carbone,
- les résines nitriles,
- le poly(butylène téréphtalate) cyclisé et les mélanges en contenant, tels que la résine CBT^{®} 100 commercialisée par CYCLICS CORPORATION,
- les adipates, notamment de dialkyles, par exemple de di(2-éthylhexyle),
- les sébacates, notamment de dialkyles et en particulier dedioctyle,
- les benzoates de glycols ou de glycérol,
- les éthers de dibenzyle,
- les chloroparaffines,
- les hydrocarbures amphiphiles fonctionnalisés tels que celui commercialisé par la société TRILLIUM SPECIALTIES sous la dénomination commerciale Trilsperse® 800,
- le carbonate de propylène,
- les sutfonamides, en particulier les alkyl sulfonamides, les aryl sulfonamides et les arylalkylsulfonamides, dont le groupe aryle est éventuellement substitué par au moins un groupe alkyle contenant de 1 à 12 atomes de carbone, telles que les benzène sulfonamides et les toluène sulfonamides, lesdites sulfonamides pouvant être N-substituées ou N,N-disubstituées par au moins un groupe alkyle, de préférence linéaire, renfermant de 1 à 20 atomes de carbone, ledit groupe alkyle portant éventuellement un groupe alkylester, alkylamide ou (alkylester)alkyl amide,
- les sels de N-alkyl guanidine dont le groupe alkyle est de préférence linéaire et renferme de 6 à 16 atomes de carbone,
- les glycols tels que le propylène glycol, et
- leurs mélanges.

5. Matériau composite selon l'une quelconque des revendications 1 à 4 **caractérisé en ce que** la composition polymérique comprend un polymère thermoplastique qui est un homo- ou copolyamide et éventuellement un plastifiant choisi parmi les sulfonamides, les hydroxybenzoates, les phtalates, les adipates et les phosphates.

6. Matériau composite selon l'une quelconque des revendications 1 à 4 **caractérisé en ce que** la composition polymérique comprend un polymère thermoplastique qui est un polycarbonate et éventuellement un plastifiant choisi parmi les alkylesters de phosphates, les arylphosphates et les phtalates.

7. Matériau composite selon l'une quelconque des revendications 1 à 4 caractérisé en que la composition polymérique comprend un polymère thermoplastique qui est un copolymère styrène-butadiène-méthacrylate de méthyle et éventuellement un plastifiant choisi parmi les phtalates et les résines nitriles.

8. Matériau composite selon la revendications 1 ou 2 **caractérisé en ce que** la composition polymérique comprend un élastomère choisi parmi : les polymères fluorocarbonés ou fluorosiliconés ; les résines nitriles ; les homo- et copolymères du butadiène, éventuellement fonctionnalisées par des monomères insaturés tels que l'anhydride maléique, l'acide (méth)acrylique, et/ou le styrène (SBR) ; le néoprène (ou polychloroprène) ; le polyisoprène ; les copolymère d'isoprène avec le styrène, le butadiène, l'acrylonitrile et/ou le méthacrylate de méthyle ; les copolymères à base de propylène et/ou d'éthylène et notamment les terpolymères à base d'éthylène, de propylène et de diènes (EPDM), ainsi que les copolymères de ces oléfines avec un (méth)acrylate d'alkyle ou l'acétate de vinyle ; les caoutchoucs butyle halogénés ; les résines de silicone les polyuréthanes ; les polyesters ; les polymères acryliques tels que le poly(acrylate de butyle) porteur de fonctions acide carboxylique ou époxy ; ainsi que leur dérivés modifiés ou fonctionnalisés et leurs mélanges.

9. Matériau composite selon la revendication 8 **caractérisé en ce que** l'élastomère est choisi parmi : les résines nitriles, en particulier les copolymères d'acrylonitrile et de butadiène (NBR) ; les résines de silicone, en particulier les poly(diméthylsiloxanes) porteurs de groupes vinyliques ; les polymères fluorocarbonés, en particulier les copolymères d'hexafluoropropylène. (HFP) et de difluorure de vinylidène (VF2) ou les terpolymères d' d'hexafluoropropylène (HFP), de difluorure de vinylidène (VF2) et de tétrafluoroéthylène (TFE), chaque monomère pouvant représenter plus de 0% et jusqu'à 80% du terpolymère ; et leurs mélanges.

10. Procédé de préparation d'un matériau composite de nanotubes, de carbone et de graphènes sous forme solide agglomérée comprenant :
(i) le mélange de nanotubes de carbone, de graphènes et d'une composition polymérique comprenant au moins un polymère thermoplastique et/ou un élastomère, le taux de nanotubes de carbone représentant de 0,1% à 50% en poids et le taux de graphènes représentant de 0,1 à 20% en poids par rapport au poids du mélange total ;
(ii) éventuellement, la transformation dudit mélange sous une forme physique solide agglomérée ; et
(iii) la récupération du matériau composite.

11. Procédé selon la revendication 10 **caractérisé en ce que** l'étape (i) consiste à mélanger des nanotubes de carbone et des graphènes sous forme de poudre, avec une composition polymérique sous forme d'un mélange poudre / granulés allant de 10:90 à 100:0.

12. Procédé selon la revendication 10 caractérisé en que l'étape (i) comprend l'introduction, dans un dispositif de compoundage, d'une composition polymérique renfermant au moins un polymère thermoplastique, des graphènes et des nanotubes, la fusion du polymère thermoplastique, puis le mélange du polymère thermoplastique fondu, des graphènes et des nanotubes, un plastifiant pouvant être ajouté au mélangeur, dans un rapport pondéral de 0 à 400% en poids, de préférence de 50 à 200% par rapport au poids de nanotubes plus graphènes mis en oeuvre, et au moins 50% du poids dudit plastifiant étant introduit en amont de, ou dans, la zone de fusion du polymère.

13. Procédé selon la revendication 10 caractérisé en que l'étape (i) consiste à malaxer des nanotubes de carbone et des graphènes avec une composition polymérique liquide comprenant au moins un élastomère, au sein d'un dispositif de compoundage.

14. Utilisation du matériau composite selon l'une quelconque des revendications 1 à 9, ou obtenu suivant le procédé selon l'une quelconque des revendication 10 à 13, pour la fabrication d'un produit final composite et/ou en vue de conférer au moins une propriété électrique, mécanique et/ou thermique à une matrice polymère.

15. Utilisation du matériau composite selon l'une quelconque des revendications 1 à 9, ou obtenu suivant le procédé selon l'une quelconque des revendication 10 à 13, pour épaissir une composition d'encre, de vernis, de peinture, de mastic, de produit bitumeux ou de béton.

16. Utilisation du matériau composite selon l'une quelconque des revendications 1 à 9, ou obtenu suivant le procédé selon l'une quelconque des revendication 10 à 13, pour fabriquer des fibres conductrices ou des films mono- ou multicouches conducteurs, présentant en général une résistivité électrique de 10⁻¹ à 10⁸ Ohm.cm.

17. Procédé de fabrication d'un produit composite comprenant :
- la fabrication d'un matériau composite suivant le procédé selon l'une quelconque des revendications 10 à 13, et
- l'introduction du matériau composite dans une matrice polymère.

18. Produit composite obtenu selon le procédé de la revendication 17 comprenant de 0,1 à 20% en poids de nanotubes de carbone.

19. Produit composite obtenu selon le procédé de la revendication 17 comprenant de 0,1% à 8% de graphènes.

20. Utilisation du produit composite selon la revendication 18 ou 19 pour la fabrication de dispositifs de transport ou de stockage de fluides, tels que des tuyaux, des réservoirs, des conduites off-shore ou des durites, ou pour la fabrication d'électrodes compactes ou poreuses, notamment de supercapacités ou de batteries.

## Patentansprüche

1. Verbundwerkstoff von Kohlenstoffnanoröhren und Graphenen in agglomerierter fester Form, umfassen:
a) Kohlenstoffnanoröhren, deren Gehalt 0,1 bis 50 Gew.-% und vorzugsweise 10 bis 40 Gew.-%, bezogen auf das Gesamtgewicht des Verbundwerkstoffs, ausmacht,
b) Graphene, deren Gehalt 0,1 bis 20 Gew,-% und vorzugsweise 1 bis 10 Gew.-%, bezogen auf das Gesamtgewicht des Verbundwerkstoffs, ausmacht,
c) eine Polymerzusammensetzung, die mindestens ein thermoplastisches Polymer und/oder ein Elastomer umfasst.

2. Verbundwerkstoff nach Anspruch 1, **dadurch gekennzeichnet, dass** die Kohlenstoffnanoröhren mehrwandig mit 5 bis 15 Lagen sind.

3. Verbundwerkstoff nach Anspruch 1 oder 2, **dadurch gekennzeichnet, dass** die Polymerzusammensetzung ein thermoplastisches Polymer umfasst, das aus Olefin-Homopolymeren und -Copolymeren wie AcrylnitrilButadien-Styrol-Copolymeren, Styrol-Butadien-Alkylmethacrylat-Copolymeren (oder SBM-Copolymeren); Polyethylen, Polypropylen, Polybutadien und Polybutylen; Acryl-Homopolymeren und -Copolymeren und Polyalkyl(meth)acrylaten, wie Poly(methylmethacrylat); Homo- und Copolyamiden; Polycarbonaten; Polyestern einschließlich Poly(ethylenterephthalat) und Poly(butylenterephthalat); Polyethern wie Poly(phenylenether), Poly(oxymethylen), Poly(oxyethylen) oder Poly(ethylenglykol) und Poly(oxypropylen); Polystyrol; Copolymeren von Styrol und Maleinsäureanhydrid; Poly(vinylchlorid); Fluorpolymeren wie Poly(vinylidenfluorid), Polytetrafluorethylen und Polychlortrifluorethylen; natürlichen oder synthetischen Kautschuken; thermoplastischen Polyurethanen; Polyaryletherketonen (PAEK) wie Polyetheretherketon (PEEK) und Polyetherketonketon (PEKK); Polyetherimid; Polysulfon; Poly(phenylensulfid); Celluloseacetat; Poly(vinylacetat) und Mischungen davon ausgewählt ist.

4. Verbundwerkstoff nach Anspruch 3, **dadurch gekennzeichnet, dass** die Polymerzusammensetzung außerdem einen Weichmacher umfasst, der aus:
- Alkylestern von Phosphaten, Hydroxybenzoesäure (deren vorzugsweise lineare Alkylgruppe 1 bis 20 Kohlenstoffatome enthält), Laurinsäure, Acyl Azelainsäure und Pelargonsäure;
- Arylphosphaten;
- Phthalaten, speziell Dialkyl- oder Alkylarylphthalaten, insbesondere Alkybenzylphthalaten, wobei die linearen oder verzweigten Alkylgruppen unabhängig 1 bis 12 Kohlenstoffatome enthalten;
- Nitrilharze;
- cyclisiertem Poly(butylenterephthalat) und dieses enthaltenden Mischungen wie das von Cyclics Corporation vertriebene Harz CBT® 100;
- Adipaten, speziell Dialkyladipaten, beispielsweise Di(2-ethylhexyl)adipat;
- Sebacaten, speziell Dialkylsebacaten und insbesondere Dioctylsebacat;
- Glykol- oder Glycerinbenzoaten;
- Dibenzylethern,
- Chlorparaffinen;
- funktionalisierten amphiphilen Kohlenwasserstoffen wie demjenigen, das von der Firma Trillium Specialties unter dem Handelsnamen Trilsperse^{®} 800 vertrieben wird;
- Propylencarbonat;
- Sulfonamiden, insbesondere Alkylsulfonamiden, Arylsulfonamiden und Arylalkylsulfonamiden, deren Arylgruppe gegebenenfalls durch mindestens eine Alkylgruppe mit 1 bis 12 Kohlenstoffatomen substituiert ist, wie Benzolsulfonamiden und Toluolsulfonamiden, wobei die Sulfonamide durch mindestens eine vorzugsweise lineare Alkylgruppe mit 1 bis 20 Kohlenstoffatomen N-substituiert oder N,N-disubstituiert sein können, wobei die Alkylgruppe gegebenenfalls eine Alkylester-, Alkylamid- oder (Alkylester)alkylamid-Gruppe trägt;
- Salzen von N-Alkylguanidinen, deren Alkylgruppe vorzugsweise linear ist und 6 bis 16 Kohlenstoffatome enthalt;
- Glykolen, wie Propylenglykol; und
- Mischungen davon
ausgewählt ist.

5. Verbundwerkstoff nach einem der Ansprüche 1 bis 4, **dadurch gekennzeichnet, dass** die Polymerzusammensetzung ein thermoplastisches Polymer, bei dem es sich um ein Homo- oder Copolyamid handelt, und gegebenenfalls einen Weichmacher, der aus Sulfonamiden, Hydroxybenzoaten, Phthalaten, Adipaten und Phosphaten ausgewählt ist, umfasst.

6. Verbundwerkstoff nach einem der Ansprüche 1 bis 4, **dadurch gekennzeichnet, dass** die Polymerzusammensetzung ein thermoplastisches Polymer, bei dem es sich um ein Polycarbonat handelt, und gegebenenfalls einen Weichmacher, der aus Alkylestern von Phosphaten, Arylphosphaten und Phthalaten ausgewählt ist, umfasst.

7. Verbundwerkstoff nach einem der Ansprüche 1 bis 4, **dadurch gekennzeichnet, dass** die Polymerzusammensetzung ein thermoplastisches Polymer, bei dem es sich um ein Styrol-Butadien-Methylmethacrylat-Copolymer handelt, und gegebenenfalls einen Weichmacher, der aus Phthalaten und Nitrilharzen ausgewählt ist, umfasst.

8. Verbundwerkstoff nach Anspruch 1 oder 2, **dadurch gekennzeichnet, dass** die Polymerzusammensetzung ein Elastomer umfasst, das aus Fluorcarbon- oder Fluorsilikonpolymeren; Nitrilharzen; Butadien-Homopolymeren und -Copolymeren, gegebenenfalls funktionalisiert mit ungesättigten Monomeren wie Maleinsäureanhydrid, (Meth)acrylsäure und/oder Styrol (SBR); Neopren (oder Polychloropren); Polyisopren; Copolymeren von Isopren mit Styrol, Butadien, Acrylnitril 1 und/oder Methylmethacrylat; Copolymeren auf Basis von Propylen und/oder Ethylen und speziell Terpolymeren auf Basis von Ethylen, Propylen und Dienen (EPDM) sowie Copolymeren dieser Olefine mit einem Alkyl(meth)acrylat oder Vinylacetat; halogenierten Butylkautschuken; Silikonharzen; Polyurethanen; Polyestern; Acrylpolymeren wie Poly(butylacrylat), die Carbonsäure- oder Epoxid-Funktionen tragen; sowie modifizierten oder funktionalisierten Derivaten davon und Mischungen davon ausgewählt ist.

9. Verbundwerkstoff nach Anspruch 8, **dadurch gekennzeichnet, dass** das Elastomer aus Nitrilharzen, insbesondere Copolymeren von Acrylnitril und Butadien (NBR); Silikonharzen, insbesondere Polydimethylsiloxanen mit Vinylgruppen; Fluorcarbonpolymeren, insbesondere Copolymeren von Hexafluorpropylen (HFP) und Vinylidendifluorid (VF2) oder Terpolymeren von Hexafluorpropylen (HFP), Vinylidendifluorid (VF2) und Tetrafluorethylen (TFE), wobei jedes Monomer mehr als 0% und bis zu 80% des Terpolymers ausmachen kann; und Mischungen davon ausgewählt ist.

10. Verfahren zur Herstellung eines Verbundwerkstoffs von Kohlenstoffnanoröhren und Graphenen in agglomerierter fester Form, bei dem man
(i) Kohlenstoffnanoröhren, Graphene und eine Polymerzusammensetzung, die mindestens ein thermoplastisches Polymer und/oder ein Elastomer umfasst, mischt, wobei der Gehalt an Kohlenstoffnanoröhren 0,1 bis 50 Gew.-% und der Gehalt an Graphenen 0,1 bis 20 Gew.-%, bezogen auf das Gesamtgewicht des Verbundwerkstoffs, ausmacht;
(ii) die Mischung gegebenenfalls in eine agglomerierte feste physikalische Form umwandelt und
(iii) das Verbundmaterial gewinnt.

11. Verfahren nach Anspruch 10, **dadurch gekennzeichnet, dass** der Schritt (i) darin besteht, dass man Kohlenstoffnanoröhren und Graphene in Pulverform mit einer Polymerzusammensetzung in Form einer Pulver/Granulat-Mischung im Bereich von 10:90 bis 100:0 mischt.

12. Verfahren nach Anspruch 10, **dadurch gekennzeichnet, dass** man in Schritt (i) eine Polymerzusammensetzung, die mindestens ein thermoplastisches Polymer enthält, Graphene und Nanoröhren in eine Compoundierungsvorrichtung einträgt, das thermoplastische Polymer aufschmilzt und dann das geschmolzene thermoplastische Polymer, die Graphene und die Nanoröhren mischt, wobei dem Mischer gegebenenfalls ein Weichmacher in einem Gewichtsanteil von 0 bis 400 Gew.-%, vorzugsweise 50 bis 200 Gew.-%, bezogen auf das Gewicht eingesetzter Nanoröhren plus Graphene, zugesetzt wird und mindestens 50 Gew.-% des Weichmachers stromaufwärts von oder in der Polymerschmelzzone eingetragen werden.

13. Verfahren nach Anspruch 10, **dadurch gekennzeichnet, dass** der Schritt (i) darin besteht, dass man Kohlenstoffnanoröhren und Graphene mit einer flüssigen Polymerzusammensetzung, die mindestens ein Elastomer umfasst, in einer Compoundierungsvorrichtung mischt.

14. Verwendung des Verbundwerkstoffs nach einem der Ansprüche 1 bis 9 bzw. des nach dem Verfahren gemäß einem der Ansprüche 10 bis 13 erhaltenen Verbundwerkstoffs zur Herstellung eines Verbund-Endprodukts und/oder zur Ausrüstung einer Polymermatrix mit mindestens einer elektrischen, mechanischen und/oder thermischen Eigenschaft.

15. Verwendung des Verbundwerkstoffs nach einem der Ansprüche 1 bis 9 bzw. des nach dem Verfahren gemäß einem der Ansprüche 10 bis 13 erhaltenen Verbundwerkstoffs zum Verdicken einer Tinten-, Lack-, Anstrichmittel-, Mastix-, Bitumenprodukt- oder Betonzusammensetzung.

16. Verwendung des Verbundwerkstoffs nach einem der Ansprüche 1 bis 9 bzw. des nach dem Verfahren gemäß einem der Ansprüche 10 bis 13 erhaltenen Verbundwerkstoffs zur Herstellung von leitfähigen Fasern oder leitfähigen ein- oder mehrschichtigen Folien, die im Allgemeinen einen spezifischen elektrischen Widerstand von 10⁻¹ bis 10⁸ Ohm.cm aufweisen.

17. Verfahren zur Herstellung eines Verbundprodukts, bei dem man:
- nach dem Verfahren gemäß einem der Ansprüche 10 bis 13 einen Verbundwerkstoff herstellt und
- den Verbundwerkstoff in eine Polymermatrix einträgt.

18. Verbundprodukt, erhalten nach dem Verfahren gemäß Anspruch 17, das 0,1 bis 20 Gew.-% Kohlenstoffnanoröhren umfasst.

19. Verbundprodukt, erhalten nach dem Verfahren gemäß Anspruch 17, das 0,1 bis 8% Graphene umfasst.

20. Verwendung des Verbundprodukts nach Anspruch 18 oder 19 zur Herstellung von Vorrichtungen zum Transport oder zur Lagerung von Fluiden, wie Rohren, Tanks, Offshore-Rohrleitungen oder Schläuchen oder zur Herstellung von kompakten oder porösen Elektroden, insbesondere Superkondensatoren oder Batterien.

## Claims

1. Composite of carbon nanotubes and of graphenes in agglomerated solid form comprising:
a) carbon nanotubes, the content of which represents from 0.1 % to 50% by weight, preferably from 10% to 40% by weight relative to the total weight of the composite;
b) graphenes, the content of which represents from 0.1% to 20% by weight, preferably from 1% to 10% by weight relative to the total weight of the composite; and
c) a polymer composition comprising at least one thermoplastic polymer and/or one elastomer.

2. Composite according to Claim 1, **characterized in that** the carbon nanotubes are multiwalled comprising from 5 to 15 sheets.

3. Composite according to Claim 1 or 2, **characterized in that** the polymer composition comprises a thermoplastic polymer chosen from: olefin homopolymers and copolymers, such as acrylonitrile-butadiene-styrene copolymers, styrene-butadiene-alkyl methacrylate (or SBM) copolymers; polyethylene, polypropylene, polybutadiene and polybutylene; acrylic homopolymers and copolymers and polyalkyl (meth)acrylates, such as polymethyl methacrylate; homopolyamides and copolyamides; polycarbonates; polyesters, including polyethylene terephthalate and polybutylene terephthalate; polyethers, such as polyphenylene ether, polyoxymethylene, polyoxyethylene or polyethylene glycol and polyoxypropylene; polystyrene; styrene/maleic anhydride copolymers; polyvinyl chloride; fluoropolymers, such as polyvinylidene fluoride, polytetrafluoroethylene and polychlorotrifluoroethylene; natural or synthetic rubbers; thermoplastic polyurethanes; polyaryletherketones (PAEK), such as polyetheretherketone (PEEK) and polyetherketoneketone (PEKK); polyetherimide; polysulphone; polyphenylene sulphide; cellulose acetate; polyvinyl acetate; and blends thereof.

4. Composite according to Claim 3, **characterized in that** the polymer composition also comprises a plasticizer chosen from:
- phosphate alkyl esters and alkyl esters of hydrobenzoic acid (the preferably linear alkyl group of which contains 1 to 20 carbon atoms), of lauric acid, of azelaic acid and of pelargonic acid;
- arylphosphates;
- phthalates, especially dialkyl or alkylaryl phthalates, in particular alkybenzyl phthalates, the alkyl groups, which are linear or branched, independently containing 1 to 12 carbon atoms;
- nitrile resins;
- cyclized polybutylene terephthalate and mixtures containing such, for instance the CBT^{®} 100 resin sold by Cyclics Corporation;
- adipates, especially dialkyl adipates, for example di(2-ethylhexyl) adipate;
- sebacates, especially dialkyl sebacates and in particular dioctyl sebacate;
- glycol benzoates or glycerol benzoates;
- dibenzyl ethers,
- chloroparaffins;
- functionalized amphiphilic hydrocarbons such as that sold by Trillium Specialties under the trade name Trilsperse^{®} 800;
- propylene carbonate;
- sulphonamides, in particular alkylsulphonamides, arylsulphonamides and arylalkylsulphonamides, the aryl group of which is optionally substituted by at last one alkyl group containing 1 to 12 carbon atoms, such as benzenesulphonamides and toluenesulphonamides, said sulphonamides possibly being N-substituted or N,N-disubstituted by at least one preferably linear alkyl group containing 1 to 20 carbon atoms, said alkyl group optionally having an alkyl ester, an alkyl amide or an (alkyl ester) alkyl amide group;
- salts of N-alkyl guanidine, the alkyl group of which is preferably linear and contains 6 to 16 carbon atoms;
- glycols, such as propylene glycol; and
- mixtures thereof.

5. Composite according to any one of Claims 1 to 4, **characterized in that** the polymer composition comprises a thermoplastic polymer which is a homopolyamide or copolyamide and optionally a plasticizer chosen from sulphonamides, hydroxybenzoates, phthalates, adipates and phosphates.

6. Composite according to any one of Claims 1 to 4, **characterized in that** the polymer composition comprises a thermoplastic polymer which is a polycarbonate and optionally a plasticizer chosen from phosphate alkyl esters, aryl phosphates and phthalates.

7. Composite according to any one of Claims 1 to 4, **characterized in that** the polymer composition comprises a thermoplastic polymer which is a styrene-butadiene-methyl methacrylate copolymer and optionally a plasticizer chosen from phthalates and nitrile resins.

8. Composite according to Claim 1 or 2, **characterized in that** the polymer composition comprises an elastomer chosen from: fluorocarbon or fluorosilicone polymers; nitrile resins; butadiene homopolymers and copolymers, optionally functionalized with unsaturated monomers such as maleic anhydride, (meth)acrylic acid and/or styrene (SBR); neoprene (or polychloroprene); polyisoprene; copolymers of isoprene with styrene, butadiene, acrylonitrile and/or methyl methacrylate; copolymers based on propylene and/or ethylene and especially terpolymers based on ethylene, propylene and dienes (EPDM), and also copolymers of these olefins which an alkyl (meth)acrylate or vinyl acetate; halogenated butyl rubbers, silicone resins; polyurethanes; polyesters; acrylic polymers such as polybutyl acrylate bearing carboxylic acid or epoxy functions; and also modified or functionalized derivatives thereof and mixtures thereof.

9. Composite according to Claim 8, **characterized in that** the elastomer is chosen from: nitrile resins, in particular copolymers of acrylonitrile and butadiene (NBR); silicone resins, in particular polydimethylsiloxanes bearing vinyl groups; fluorocarbon polymers, in particular copolymers of hexafluoropropylene (HFP) and of vinylidene difluoride (VF2) or terpolymers of hexafluoropropylene (HFP), of vinylidene difluoride (VF2) and of tetrafluoroethylene (TFE), each monomer possibly representing more than 0% and up to 80% of the terpolymer; and mixtures thereof.

10. Process for preparing a composite of carbon nanotubes and of graphenes in agglomerated solid form comprising:
(i) mixing carbon nanotubes, graphenes and a polymer composition comprising at least one thermoplastic polymer and/or elastomer, the content of carbon nanotubes representing from 0.1 % to 50% by weight and the content of graphenes representing from 0.1 to 20% by weight relative to the weight of the total mixture;
(ii) optionally, converting said mixture into an agglomerated solid physical form; and
(iii) recovering the composite.

11. Process according to Claim 10, **characterized in that** step (i) consists in mixing carbon nanotubes and graphenes in powder form, with a polymer composition in the form of a powder/granule mixture ranging from 10/90 to 100/0.

12. Process according to Claim 10, **characterized in that** step (i) comprises the introduction, into a compounding device, of a polymer composition containing at least one thermoplastic polymer, graphenes and nanotubes, the melting of the thermoplastic polymer, then the mixing of the molten thermoplastic polymer, graphenes and nanotubes, a plasticizer possibly being added to the mixer, in a weight ratio from 0 to 400% by weight, preferably from 50 to 200% relative to the weight of nanotubes plus graphenes used, and at least 50% of the weight of said plasticizer being introduced upstream of, or into, the polymer melting zone.

13. Process according to Claim 10, **characterized in that** step (i) consists in kneading carbon nanotubes and graphenes with a liquid polymer composition comprising at least one elastomer, within a compounding device.

14. Use of the composite according to any one of Claims 1 to 9, or obtained according to the process according to any one of Claims 10 to 13, for manufacturing a composite end product and/or with a view to conferring at least one electrical, mechanical and/or thermal property on a polymer matrix.

15. Use of the composite according to any one of Claims 1 to 9, or obtained according to the process according to any one of Claims 10 to 13, for thickening an ink, varnish, paint, mastic, bituminous product or concrete composition.

16. Use of the composite according to any one of Claims 1 to 9, or obtained according to the process according to any one of Claims 10 to 13, for manufacturing conductive fibres or conductive single-layer or multilayer films, in general having an electrical resistivity of 10⁻¹ to 10⁸ ohm.cm.

17. Process for manufacturing a composite product comprising:
- manufacturing a composite according to the process according to any one of Claims 10 to 13, and
- introducing the composite into a polymer matrix.

18. Composite product obtained according to the process of Claim 17, comprising from 0.1 % to 20% by weight of carbon nanotubes.

19. Composite product obtained according to the process of Claim 17, comprising from 0.1 % to 8% of graphenes.

20. Use of the composite product according to Claim 18 or 19, for manufacturing devices for the transport or storage of fluids, such as pipes, tanks, offshore pipelines or hoses, or for manufacturing compact or porous electrodes, especially supercapacitors or batteries.
